# EUROPEAN PATENT SPECIFICATION

(11) **EP 0 583 893 B1**
(45) Date of publication and mention of the grant of the patent: **28.05.1997**
(21) Application number: 93305863.8
(22) Date of filing: 26.07.1993
(51) Int. Cl.: B29C 65/74

(54) **Method and apparatus for forming bags**
Verfahren und Vorrichtung zum Herstellen von Säcken
Méthode et dispositif pour la fabrication de sachets

(30) Priority: 28.07.1992 GB 9216040
(43) Date of publication of application: 23.02.1994
(73) Proprietor: CHARTEX INTERNATIONAL PLC, London W1M 9HF (GB)
(72) Inventor: Glyn-Woods, John, Ealing, London, W5 2EE (GB); Rhodes, Ian, Royston, Hertfordshire, SG8 5QD (GB); Pope, Mike, Tetsworth, Oxon, OX9 7AS (GB)
(74) Representative: Carmichael, David Andrew Halliday

(56) References cited:
- DE-A- 2 836 279
- DE-U- 8 705 710
- GB-A- 1 243 123
- US-A- 2 638 963

## Description

This invention relates to a method and apparatus for forming multiple ply plastic articles such as bags. Specifically, this invention relates to a method for welding and cutting multiple plies of plastic film and a welding tool therefor.

It is known from GB-A-1 243 123 to provide a welding tool for welding and cutting a tear seal edge into multiple plies of plastic film, the welding tool including a substantially planar base and a knife edge extending from the base.

The present invention is a welding tool for welding and cutting a tear seal edge into multiple plies of plastics film characterised in that:
a cross section of the knife edge has three surfaces for engaging the multiple plies of plastic film, the three surfaces at the cross section being;
a planar cutting surface substantially parallel to the base, the planar cutting surface contacts the in a coplanar engagement with the multiple plies of plastic film, forms a tear seal edge, and welds the plastic film to a flexible substrate;
a planar welding surface on a first side of the planar cutting surface and positioned between the planar cutting surface and the base, the planar welding surface fusing the multiple plies of plastic film together;
a planar separating surface substantially parallel with the planar cutting surface and in a plane between the planar welding surface and the base, the planar separating surface providing a clearance on a second side of the planar cutting surface opposite to the planar welding surface, the planar separating surface assisting in pushing the multiple plies of plastic film away from the tear seal edge of the multiple plies of plastic film; and
a heating means for heating the planar cutting surface and the planar welding surface.

The invention also includes within its scope a method for welding and cutting a multiple ply plastic article characterised by the steps of;
passing multiple plies of plastic film over a resilient flexible sheet material into a reciprocating press;
pressing a heated knife edge on the reciprocating press into the multiple plies of plastic film and the resilient flexible sheet material to form the plastic article and a tear seal edge in the multiple plies of plastic film, the knife edge having a cross section of three surfaces for engaging the multiple plies of plastic film, the three surfaces at the cross section simultaneously performing the steps of:
forming a tear seal with a planar cutting surface for pressing into the multiple plies of plastic film in a coplanar engagement with the multiple plies of plastic film;
fusing the plies of plastic film together with a planar welding surface on a first side of the planar cutting surface, the planar welding surface; and
pushing the multiple plies of plastic film away from the tear of the multiple plies of plastic film with a planar separating surface for coplanar engagement with the plies, the planar separating surface being parallel to the planar cutting surface and on a second side of the planar cutting surface opposite to the planar welding surface and
stripping excess of the plastic film from the plastic articles adhered to the resilient flexible sheet material.

The invention can be performed in various ways and one specific embodiment and a modification thereof will now be described by way of example with reference to the accompanying drawings in which:
Figure 1 -is a plan view of a set of bags formed by a machine that utilizes the invention;
Figure 2 -is an underneath plan view of a welding tool according to the present invention;
Figure 3 -is a section on line A-A of Figure 2;
Figure 4 -is a section on the line B-B of Figure 2;
Figure 5 -is a section on the line C-C of Figure 2; and
Figure 6 -is a cross section of the knife edge of the welding tool of this invention.

The invention is used as part of a commercially available machine for processing multiple plies of plastic film. A reel of polyurethane film, a second reel, also, of polyurethane film or sheet material, and a reel of a resilient flexible sheet material such as backing paper are each fed into the machine. Each of the reels is rotatably mounted on a shaft.

The films and backing paper arrive at a first transport station by means of various rollers and tensioning devices. The films and backing paper are positioned with the first film of polyurethane material on top, the second film as an intermediate layer, and the backing paper as a resilient flexible sheet material underneath.

The films and backing paper proceed by clamping and moving means to a first press. The first press is only used in a second embodiment of the method as described later and moves the films and backing paper to a hole punching station and, then, to a second press or reciprocating press before proceeding to a second transport station, a stripper, a perforator, a folding station, and a takeoff conveyer.

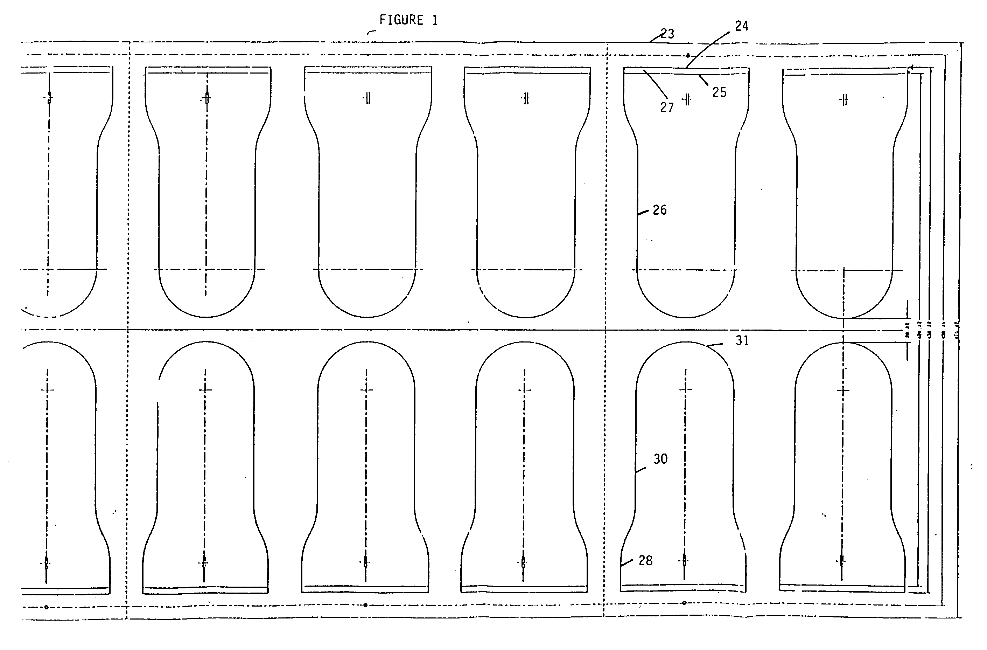

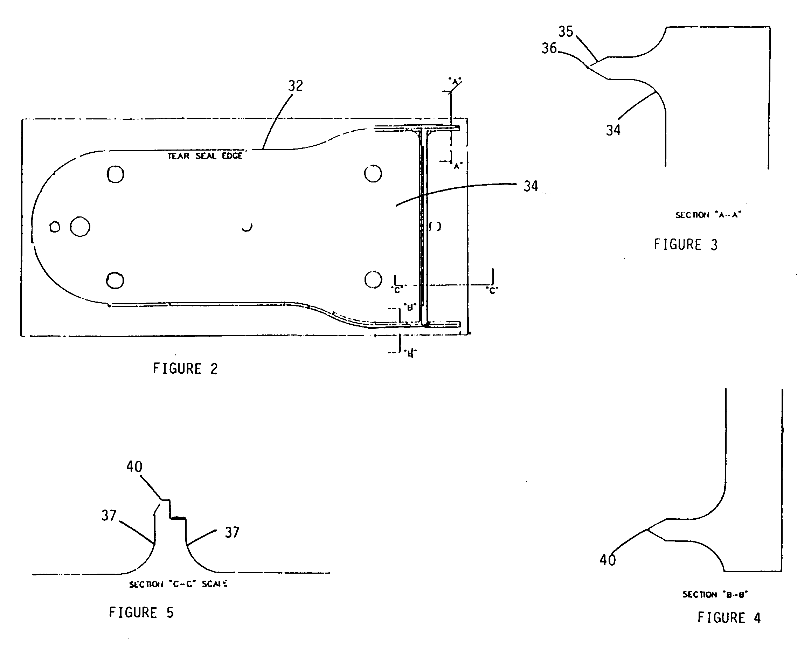

The operation of the machine becomes more apparent in reference to the Figure. Figure 1 shows the finished product, but references to the final product help to explain its method of manufacture and its construction. Figures 2 to 6 show details of the welding tool.

Figure 1 illustrates the backing paper 23. The backing paper 23 extends substantially over the whole width of the machine. The invention can be used to weld and cut a plurality of sheets of polymer or resin films. The preferred embodiment of the invention forms both a "weld and cut" or a "tear seal edge" with two plies of commercially available polyurethane film. The invention can be used to form a tear seal edge to make a large variety of multiple ply plastic articles, but the preferred embodiment of the invention makes plastic bags for use in female contraceptive devices.

The two sheets of polyurethane film are of slightly different widths with the underneath layer being of greater width than the upper layer. The difference in widths can be seen in Figure 1 by comparing the lower layer 24 with the sides of the upper layer 25. The lower layer 24 is adhered to the backing paper 23 around the horseshoe periphery 26 of the lower layer 24 and throughout the whole of its outer periphery while the inner or upper layer 25 is adhered to the lower layer 24 except at the front flat strip 27 so as to leave the bag open.

Figure 2 illustrates one embodiment of the welding tool for welding the multiple plies of polyurethane. This welding tool is used in the reciprocating press.

The form of the preferred bags is, generally, a horseshoe shape. The bags have an enlarged collar portion 28 adjacent the front with a, generally, constant diameter portion 30 to the rear, thus forming the main length of the bag, joined by a semicircular end 31.

Figures 2 through 5 illustrate the welding tool. The welding tool is, desirably, machined from metal and must have a smooth polished finish. The smooth polished finish is especially required when the welding tool is heated, desirably, as an electrode, to melt the plastic films.

The welding tool comprises a platen 32 provided with a recessed base 34. A flange or knife edge, having a V-shaped lower end 35, projects and extends to a line tip 36. The contour of the line tip 36 corresponds to the shape of the horseshoe part of the bag as shown in Figure 1. The welding tool is, desirably, heated to provide an appropriate welding temperature for a specific polymer or resin film at the line tip 36. Twelve tools are provided and operate on opposite sides of the press, i.e. six on each side, of the preferred embodiment of the invention.

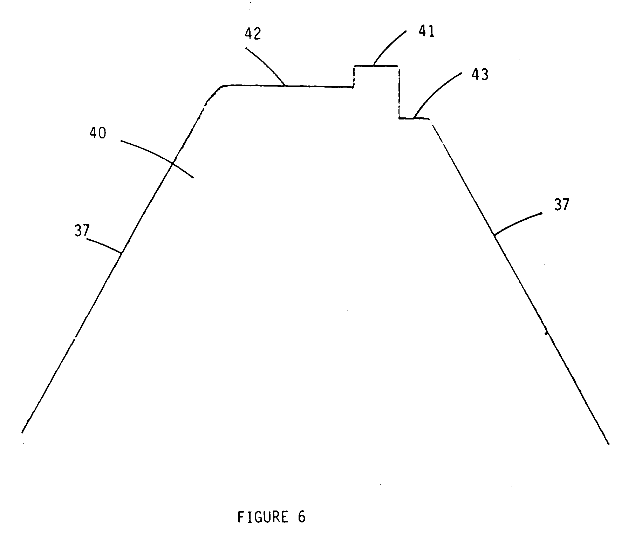

Figure 6 is an enlarged view of the flange or knife edge 40 of Figures 4 and 5. The knife edge 40 has a cross section with three surfaces for engaging the multiple plies of plastic film. The three surfaces at the cross section include a planar cutting surface 41, an planar welding surface 42, and a planar separating surface 43.

The planar cutting surface 41, desirably, has a uniform width. The width of the planar cutting surface 41 can be a fraction of a micron or, essentially, an intersect line between the planar welding surface 42 and the planar separating surface 43. The planar cutting surface presses into the multiple plies of plastic film in a coplanar engagement with the multiple plies of plastic film.

The planar welding surface 42 is on a first side of the planar cutting surface 41. The planar welding surface 42 fuses the multiple plies of plastic film to substantially eliminate any flash of a weld formed by the fusion of the multiple plies plastic film. The planar welding surface 42 can be cut at an angle of about 3° from the planar cutting surface 41. The length of the planar welding surface 42 is about 300 microns and the height of the planar cutting surface 41 above the planar welding surface 42 is about 45 microns, and the length of the planar cutting surface 41 is about 100 microns.

The planar separating surface 43 is on a second side of the planar cutting surface 41 opposite to the planar welding surface 42 and is spaced 100 microns above it. The planar separating surface 43 provides a clearance which assists in pushing the multiple plies of plastic film away from the weld of the multiple plies of plastic film at the tear seal edge of the welded plastic film.

In operation, the two polyurethane films of the lower layer 24 and the upper layer 25 and the backing paper 23 enter the reciprocating press. On entering the reciprocating press in this particular embodiment, the heated welding tool descends to engage the sheets. The welding tool descends until the knife edge or line tip 36 engages the two sheets of plastic film and, in so doing, then welds the two sheets to each other along the horseshoe line and, also, to the sheet of backing paper 23. At the same time, as shown in Figure 5, a rear part 37 of the welding tool engages the rectangular area 27 of single ply plastic of lower layer 24 to weld it to the sheet of backing paper 23 while at the same time avoiding welding the upper layer 25 to the lower layer 24 so as to maintain an open entrance to the bag. The welding tool, also, provides the bags with a tear seal edge so that excess film can easily be removed.

From this position the bags are then moved to a second transport station and the next set of bags enter the reciprocating press. In the transport station the bags are moved once again by clamps gripping the paper to index the bag the approximate distance along the processing line of the machine.

The bags are then moved to a stripping station. The stripping station has means for removing the excess or surplus polyurethane along the tear seal edges. The stripping procedure leaves the bags on the backing paper 23 as shown in Figure 1. The bags can then moved to a perforating station. The perforations cause a "line of weakness" 37 to be produced in the backing paper 23 as shown in Figure 1. The bags are then passed to a folding station where the backing paper is folded in "fan-fold form" in batches of six bags on each side of a folded section of backing paper 23, i.e. twelve in total. An off-take conveyer removes the bags on the folded backing paper 23 for storage.

In the alternative embodiment, the first press is, also, used and in a first operation to heat and seal the open area 27 of the lower layer 24 of plastic film to the backing paper 23. The remaining operations can then be performed by a slightly modified tool in the second press in the same way as previously described, except for this weld to the backing paper 23. With this arrangement, the two sheets of polyurethane film need not be of different widths and can be the same width. In this embodiment, a plough can be provided to separate and guide the upper layer 25 of film away from the lower layer 24 so that the lower layer 24 can be welded.

The present invention thus provide a method and apparatus for producing plastic articles, such as bags of polyurethane film, adhered to a backing surface. This combination can be used for a variety of purposes and, in particular, with reference to the Applicant's co-pending U.K. Patent Application No. 93 08453.1 where the bags are formed inter alia into contraceptive devices.

## Claims

1. A welding tool for welding and cutting a tear seal edge into multiple plies of plastic film, the welding tool including:
a substantially planar base (34) and a knife edge (40) extending from the base (34) characterised in that:
a cross section of the knife edge (40) has three surfaces for engaging the multiple plies of plastic film, the three surfaces at the cross section being:
a planar cutting surface (41) substantially parallel to the base, the planar cutting surface (41) contacts the multiple plies of plastic film in a coplanar engagement with the multiple plies of plastic film, forms a tear seal edge, and welds the plastic film to a flexible substrate (23);
a planar welding surface (42) on a first side of the planar cutting surface (41) and positioned between the planar cutting surface (41) and the base (34), the planar welding surface (42) fusing the multiple plies of plastic film together;
a planar separating surface (43) substantially parallel with the planar cutting surface (41) and in a plane between the planar welding surface (42) and the base (34), the planar separating surface (43) providing a clearance on a second side of the planar cutting surface (41) opposite to the planar welding surface (42), the planar separating surface (43) assisting in pushing the multiple plies of plastic film away from the tear seal edge of the multiple plies of plastic film; and
a heating means for heating the planar cutting surface and the planar welding surface.

2. A welding tool as claimed in Claim 1, characterised in that the knife edge (40) is an electrode, which heats to a melting temperature of the multiple plies of plastic film.

3. A welding tool as claimed in Claim 1 or Claim 2, characterised in that the planar cutting surface (41) has a uniform width, which is a line formed between the intercepts of the planar welding surface (42) and the planar separating surface (43).

4. A welding tool as claimed in any one of Claims 1 to 3, characterised in that the planar welding surface (42) is cut at a declining angle of about 3° from the planar cutting surface (41).

5. A welding tool as claimed in any one of Claims 1 to 4, characterised in that the tool is affixed to a reciprocating press.

6. A welding tool as claimed in Claim 5, characterised in that a conveyer means passes the multiple plies of plastic film into the reciprocating press on a resilient flexible sheet material (23) for contact with the welding tool.

7. A welding tool as claimed in Claim 6, characterised in that the reciprocating press presses the welding tool into the multiple plies of plastic film whereby (i) the multiple plies of plastic film are welded together to form a plastic article, (ii) the plastic article is adhered to the resilient flexible sheet material (23), and (iii) the plastic article is cut from an excess of the multiple plies of plastic film.

8. A welding tool as claimed in Claim 7, characterised in that a stripper lifts and removes the excess of the multiple plies of plastic film from the plastic articles adhered to the resilient flexible sheet material (23).

9. A method for welding and cutting a multiple ply plastic article characterised by the steps of:
passing multiple plies of plastic film over a resilient flexible sheet material (23) into a reciprocating press;
pressing a heated knife edge (40) on the reciprocating press into the multiple plies of plastic film and the resilient flexible sheet material (23) to form the plastic article and a tear seal edge in the multiple plies of plastic film, the knife edge (40) having a cross section of three surfaces for engaging the multiple plies of plastic film, the three surfaces at the cross section simultaneously performing the steps of:
forming a tear seal with a planar cutting surface (41) for pressing into the multiple plies of plastic film in a coplanar engagement with the multiple plies of plastic film;
fusing the plies of plastic film together with a planar welding surface (42) on a first side of the planar cutting surface (41), the planar welding surface (42); and
pushing the multiple plies of plastic film away from the tear of the multiple plies of plastic film with a planar separating surface (43) for coplanar engagement with the plies, the planar separating surface (43) being parallel to the planar cutting surface (41) and on a second side of the planar cutting surface (41) opposite to the planar welding surface (42); and
stripping excess of the plastic film from the plastic articles adhered to the resilient flexible sheet material (23).

10. A process as claimed in Claim 9, characterised in that the pressing of the knife edge (40) includes a simultaneous heating of the knife edge (40) to a melting temperature of the multiple plies of plastic film.

11. A process as claimed in Claim 9 or Claim 10, characterised in that the planar cutting surface (41) has a uniform width, the uniform width being a line formed between the intercepts of the planar welding surface (42) and the planar separating surface (43).

## Patentansprüche

1. Schweißwerkzeug zum Schweißen und Schneiden einer Trenndichtungskante bei einer mehrere Schichten umfassenden Folie, wobei das Schweißwerkzeug folgendes umfaßt:
eine im wesentlichen planare Basis (34) und eine Schneidkante (40), welche von der Basis (34) ausgeht,
dadurch gekennzeichnet, daß:
ein Querschnitt der Schneidkante (40) drei Flächen zum Zusammenarbeiten mit der mehrere Schichten umfassenden Kunststoffolie hat, wobei die drei Flächen im Querschnitt wie folgt angeordnet sind:
eine planare Schneidfläche (41), welche im wesentlichen parallel zur Basis ist, wobei die planare Schneidfläche (41) die mehrere Schichten umfassende Kunststoffolie in einer koplanaren Zuordnung mit der mehrere Schichten umfassenden Kunststoffolie berührt, eine Trenndichtungskante bildet und die Kunststoffolie mit einem flexiblen Substrat (23) verschweißt;
eine planare Schweißfläche (42) auf einer ersten Seite der planaren Schneidfläche (41), welche zwischen der planaren Schneidfläche (41) und der Basis (34) angeordnet ist, wobei die planare Schneidfläche (42) die mehrere Lagen umfassende Kunststoffolie zusammenschweißt;
eine planare Trennfläche (43), welche im wesentlichen parallel zu der planaren Schneidfläche (41) ist und in einer Ebene zwischen der planaren Schweißfläche (42) und der Basis (34) angeordnet ist, wobei die planare Trennfläche (43) einen Zwischenraum auf einer zweiten Seite der planaren Schneidfläche (41) der planaren Schweißfläche (42) gegenüberliegend bereitstellt, und wobei die planare Trennfläche (43) dahingehend unterstützend wirkt, daß die mehrere Schichten umfassende Kunststoffolie von der Trenndichtungskante der mehrere Schichten umfassenden Kunststoffolie weggedrückt wird; und
eine Heizeinrichtung, welche die planare Schneidfläche und die planare Schweißfläche erwärmt.

2. Schweißwerkzeug nach Anspruch 1, dadurch gekennzeichnet, daß die Schneidkante (40) eine Elektrode ist, welche die mehrere Schichten umfassende Kunststoffolie auf eine Schmelztemperatur erwärmt.

3. Schweißwerkzeug nach Anspruch 1 oder Anspruch 2, dadurch gekennzeichnet, daß die planare Schneidfläche (41) eine gleichmäßige Breite hat, welche als eine Linie ausgebildet ist, welche zwischen den Abschnitten der planten Schweißfläche (42) und der planaren Trennfläche (43) gebildet wird.

4. Schweißwerkzeug nach einem der Ansprüche 1 bis 3, dadurch gekennzeichnet, daß die planare Schweißfläche (42) unter einem Abnahmewinkel von etwa 3° gegenüber der planaren Schneidfläche (41) abgeschnitten ist.

5. Schweißwerkzeug nach einem der Ansprüche 1 bis 4, dadurch gekennzeichnet, daß das Werkzeug an einer Hubpresse befestigt ist.

6. Schweißwerkzeug nach Anspruch 5, dadurch gekennzeichnet, daß eine Fördereinrichtung die mehrere Schichten umfassende Kunststoffolie in die Hubpresse auf einem federnd nachgiebigen Flächenmaterial (23) zum Kontakt mit dem Schweißwerkzeug transportiert.

7. Schweißwerkzeug nach Anspruch 6, dadurch gekennzeichnet, daß die Hubpresse das Schweißwerkzeug in die mehrere Schichten umfassende Kunststoffolie drückt, wodurch (i) die mehrere Schichten umfassende Kunststoffolie zur Bildung eines Kunststoffgegenstandes zusammengeschweißt wird, (ii) der Kunststoffgegenstand haftend mit dem federnd nachgiebigen, flexiblen Flächenmaterial (23) verbunden wird, und (iii) der Kunststoffgegenstand von einem Überschuß der mehrere Schichten umfassenden Kunststoffolie abgetrennt wird.

8. Schweißwerkzeug nach Anspruch 7, dadurch gekennzeichnet, daß ein Abstreifer die überschüssige, mehrere Lagen umfassende Kunststoffolie anhebt und von den Kunststoffgegenständen entfernt, welche haftend mit dem federnd nachgiebigen, flexiblen Flächenmaterial (23) verbunden sind.

9. Verfahren zum Schweißen und Schneiden eines mehrere Schichten umfassenden Kunststoffgegenstandes, gekennzeichnet durch die folgenden Schritte:
Durchleiten einer mehrere Schichten umfassenden Kunststoffolie über einem federnd nachgiebigen, flexiblen Flächenmaterial (23) in eine Hubpresse;
Pressen einer erwärmten Schneidkante (40) in die mehrere Schichten umfassenden Kunststoffolie und das federnd nachgiebige, flexible Flächenmaterial (23) in der Presse, um einen Kunststoffgegenstand und eine Trenndichtungskante in der mehrere Schichten umfassenden Kunststoffolie zu bilden, wobei die Schneidkante (40) einen Querschnitt mit drei Flächen hat, welche mit der mehrere Schichten umfassenden Kunststoffolie zusammenarbeiten, wobei die drei Flächen im Querschnitt gleichzeitig folgende Schritte durchführen:
Ausbilden einer Trenndichtung mit einer planaren Schneidfläche (41) zum Einpressen in die mehrere Schichten umfassenden Kunststoffolie mit einem koplanaren Zusammenarbeiten mit der mehrere Schichten umfassenden Kunststoffolie;
Zusammenschmelzen der Schichten der Kunststoffolie mit einer planaren Schweißfläche (42) an einer ersten Seite der planaren Schneidfläche (41) und der planaren Schneidfläche (42); und
Wegdrücken der mehrere Schichten umfassenden Kunststoffolie von der Trennung der mehrere Schichten umfassenden Kunststoffolie mit einer planaren Trennfläche (43) zum koplanaren Zusammenarbeiten mit den Schichten wobei die planare Trennfläche (43) parallel zur planaren Schneidfläche (41) ist und auf einer zweiten Seite der planaren Schneidfläche (41) der planaren Schweißfläche (42) gegenüberliegend angeordnet ist; und
Abstreifen der überschüssigen Kunststoffolie von den Kunststoffgegenständen, welche haftend mit dem federnd nachgiebigen, flexiblen Flächenmaterial (23) verbunden sind.

10. Verfahren nach Anspruch 9, dadurch gekennzeichnet, daß das Pressen der Schneidkante (44) umfaßt, daß gleichzeitig die Schneidkante (40) auf eine Schmelztemperatur der mehrere Schichten umfassenden Kunststoffolie erwärmt wird.

11. Verfahren nach Anspruch 9 oder Anspruch 10, dadurch gekennzeichnet, daß die planare Schneidfläche (41) eine gleichmäßige Breite hat, wobei die gleichmäßige Breite eine Linie ist, welche zwischen den Abschnitten der planaren Schweißfläche (42) und der planaren Trennfläche (43) gebildet wird.

## Revendications

1. Outil de soudage pour souder et découper un bord de scellement déchirable en nappes multiples de film plastique, ledit outil de soudage comprenant :
une base sensiblement plane (34) et une arête de coupe (40) qui s'étend à partir de la base (34);
caractérisé en ce que :
une section transversale de l'arête de coupe (40) possède trois surfaces destinées à s'appliquer contre les nappes multiples de film plastique, les trois surfaces dans la section transversale étant :
une surface plane de coupe (41) sensiblement parallèle à la base, la surface plane de coupe (41) venant en contact avec les nappes multiples de film plastique selon une application coplanaire avec les nappes multiples de film plastique, formant un bord de scellement déchirable et soudant le film plastique sur un substrat flexible (23);
une surface plane de soudage (42) située sur un premier côté de la surface plane de coupe (41) et positionnée entre la surface plane de coupe (41) et la base (34), la surface plane de soudage (42) réunissant par fusion les nappes multiples de film plastique;
une surface plane de séparation (43) sensiblement parallèle à la surface plane de coupe (41) et située dans un plan entre la surface plane de soudage (42) et la base (34), la surface plane de séparation (43) fournissant un jeu sur un second côté de la surface plane de coupe (41) à l'opposé de la surface plane de soudage (42), la surface plane de séparation (43) contribuant à repousser les nappes multiples de film plastique depuis le bord de scellement déchirable des nappes multiples de film plastique; et
des moyens de chauffage pour chauffer la surface plane de coupe et la surface plane de soudage.

2. Outil de soudage selon la revendication 1, caractérisé en ce que l'arête de coupe (40) est une électrode, qui chauffe les nappes multiples de film plastique à une température de fusion.

3. Outil de soudage selon la revendication 1 ou la revendication 2, caractérisé en ce que la surface plane de coupe (41) possède une largeur uniforme, qui est une ligne formée entre les extrémités de la surface plane de soudage (42) et de la surface plane de séparation (43).

4. Outil de soudage selon l'une quelconque des revendications 1 à 3, caractérisé en ce que la surface plane de soudage (42) est découpée avec un angle d'inclinaison d'environ 3° par rapport à la surface plane de coupe (41).

5. Outil de soudage selon l'une quelconque des revendications 1 à 4, caractérisé en ce que l'outil est fixé à une presse à mouvement alternatif.

6. Outil de soudage selon la revendication 5, caractérisé en ce que des moyens convoyeurs transfèrent les nappes multiples de film plastique dans la presse à mouvement alternatif sur un matériau en forme de feuille flexible élastique (23) pour établir le contact avec l'outil de soudage.

7. Outil de soudage selon la revendication 6, caractérisé en ce que la presse à mouvement alternatif repousse l'outil de soudage dans les nappes multiples de film plastique, ce qui a pour effet que (i) les nappes multiples de film plastique sont réunies par soudage pour former un article plastique, (ii) l'article plastique adhère au matériau en forme de feuille flexible élastique (23) et (iii) l'article plastique est séparé par découpage, d'un excès des nappes multiples de film plastique.

8. Outil de soudage selon la revendication 7, caractérisé en ce qu'un dispositif d'extraction soulève et retire l'excès des nappes multiples de film plastique des articles plastiques qui adhèrent au matériau en forme de feuille flexible élastique (23).

9. Procédé pour souder et découper un article plastique à nappes multiples, caractérisé par les étapes consistant à :
faire passer des nappes multiples de film plastique sur un matériau en forme de feuille flexible élastique (23) dans une presse à mouvement alternatif;
presser une arête de coupe chauffée (40) installée sur la presse à mouvement alternatif, dans les nappes multiples de film plastique et dans le matériau en forme de feuille flexible élastique (23) pour former l'article plastique et un bord de scellement déchirable dans les nappes multiples de film plastique, l'arête de coupe (40) possédant une section transversale comprenant trois surfaces destinées à s'appliquer contre les nappes multiples de film plastique, les trois surfaces dans la section transversale exécutant simultanément les étapes consistant à :
former un bord de scellement déchirable avec une surface plane de coupe (41) destinée à être pressée dans les nappes multiples de film plastique selon un engagement coplanaire avec les nappes multiples de film plastique;
réunir par fusion les nappes de film plastique conjointement avec une surface plane de soudage (42) sur un premier côté de la surface plane de coupe (41), la surface plane de soudage (42); et
repousser les nappes multiples de film plastique depuis le bord de scellement déchirable des nappes multiples de film plastique avec une surface plane de séparation (43) pour un engagement coplanaire avec les nappes, la surface plane de séparation (43) étant parallèle à la surface plane de coupe (41) et sur un second côté de la surface plane de coupe (41) situé à l'opposé de la surface plane de soudage (42); et
retirer l'excès de film plastique des articles plastiques adhérant au matériau en forme de feuille plastique élastique (23).

10. Procédé selon la revendication 9, caractérisé en ce que le pressage de l'arête de coupe (40) inclut un chauffage simultané de l'arête de coupe (40) à une température de fusion des nappes multiples de film plastique.

11. Procédé selon la revendication 9 ou la revendication 10, caractérisé en ce que la surface plane de coupe (41) possède une largeur uniforme, la largeur uniforme étant une ligne formée entre les extrémités de la surface plane de soudage (42) et de la surface plane de séparation (43).
